# EUROPÄISCHE PATENTSCHRIFT

(11) **EP 3 139 150 B1**
(45) Veröffentlichungstag und Bekanntmachung des Hinweises auf die Patenterteilung: **28.10.2020**
(21) Anmeldenummer: 16183479.1
(22) Anmeldetag: 10.08.2016
(51) Int. Cl.: G01N 1/36

(54) **VERFAHREN UND AUTOMAT ZUM EINBETTEN EINER GEWEBEPROBE IN EIN EINBETTMEDIUM**
METHOD AND MACHINE FOR EMBEDDING A TISSUE SAMPLE IN AN EMBEDDING MEDIUM
PROCEDE ET AUTOMATE DESTINES A ENCAPSULER UN ECHANTILLON DE TISSU DANS UN MILIEU D'ENROBAGE

(30) Priorität: 04.09.2015 DE 102015114893
(43) Veröffentlichungstag der Anmeldung: 08.03.2017
(73) Patentinhaber: Leica Biosystems Nussloch GmbH, 69226 Nussloch (DE)
(72) Erfinder: Böhl, Florian, 69151 Neckargemünd (DE); Eckert, Ralf, 69198 Schriesheim (DE); Flieger, Karin, 64342 Seeheim-Jugendheim (DE); Berberich, Markus, 69120 Heidelberg (DE); Ulbrich, Hermann, 76669 Bad Schönborn (DE); Knorr, Stella, Brighton, Victoria 3186 (AU); Guy, Andrew, Coburg, Victoria 3058 (AU)
(74) Vertreter: Hoffmann, Jürgen

(56) Entgegenhaltungen:
- DE-A1-102013 204 651
- US-A1- 2008 254 504
- US-A1- 2010 151 513
- US-A1- 2015 160 104
- Anonymous: "Paraffin Processing of Tissue | Protocols Online", , 12 March 2019 (2019-03-12), XP055567658, Retrieved from the Internet: URL:https://www.protocolsonline.com/histol ogy/sample-preparation/paraffin-processing -of-tissue/ [retrieved on 2019-03-12]

## Beschreibung

Die Erfindung betrifft ein Verfahren zum Einbetten einer Gewebeprobe in ein Einbettmedium.

Die Erfindung betrifft außerdem einen Automaten zum Ausführen eines solchen Verfahrens, sowie die Verwendung einer Gewebekassette, die einen Behälter mit einer Basis und ein Halteelement zum Halten wenigstens einer Gewebeprobe an der Basis aufweist, bei der Ausführung eines solchen Verfahrens.

Es ist bekannt, wie eine biologische Gewebeprobe für eine histologische Untersuchung zu verarbeiten ist. Zunächst erfolgen der Zuschnitt der Gewebeprobe und das Einbringen in eine Kassette. Anschließend wird die Probe durch eine Mehrzahl von chemischen Behandlungen für eine mikroskopische Untersuchung präpariert. Hierbei wird die Probe zunächst mit einem Fixiermedium fixiert, das in der Probe befindliche Wasser entzogen und ggf. weitere Bearbeitungsschritte vollzogen. Am Ende dieses mehrstufigen Prozesses steht das Infiltrieren eines Infiltrationsmediums, zumeist Paraffin, in die Probe.

Danach wird die Probe, zumeist von Hand, in ein Einbettmedium, beispielsweise Paraffin, eingebettet. Hierzu wird die Probe in eine Ausgießform, die auch Mold genannt wird, eingelegt und die Ausgießform mit dem zunächst flüssigen Einbettmedium aufgefüllt. Anschließend härtet das Einbettmedium aus. Im Ergebnis entsteht ein Einbettblock, in dem die Probe von dem Einbettmedium umschlossen und ortsfest fixiert ist.

Nach dem Aushärten des Einbettmediums kann der Einbettblock, der die Probe beinhaltet, mit dem Mikrotom in einzelne dünne Probenschnitte geschnitten werden, die in einem nächsten Schritt gefärbt und dann mit einem Mikroskop untersucht werden können. Hierzu ist es wichtig, dass die Gewebeprobe innerhalb des Einbettblocks eine bestimmte Ausrichtung aufweist. Dies insbesondere um ein ordnungsgemäßes Schneiden zu gewährleisten und um zu gewährleisten, dass die Gewebeprobe entlang der bei der mikroskopischen Untersuchung interessierenden Probenschichten geschnitten werden kann.

Um den Prozesses des Einbettens automatisieren zu können ist es erforderlich, dass die Gewebeprobe während des Einbettvorganges ihre Sollausrichtung relativ zu dem Ausgießgefäß beibehält. Verwendet man ein Halteelement, das die Gewebeprobe in ihrer Ausrichtung hält, besteht das Problem, dass das Halteelement zwangsläufig zusammen mit der Gewebeprobe eingebettet wird und das spätere Erzeugen von Probenschnitten behindert und/oder sogar die Mikrotomklinge beschädigt.

Aus EP 2 322 938 B1 ist eine automatisierte Maschine bekannt, die zum Einbetten von Gewebeproben ausgebildet ist, die auf ganz speziellen Trägern angeordnet sein müssen, Die Träger sind geeignet mittels eines Mikrotoms gemeinsam mit der eingebetteten Probe geschnitten zu werden. Die Maschine weist mehrere unbewegliche Halter auf, wobei jeder Halter dazu ausgebildet ist, einen der speziellen Träger während des gesamten Einbettvorganges zu halten. Nachdem ein mit einer Probe gefüllter Träger in einem Halter positioniert wurde, wird der Träger mit einem Einbettmedium gefüllt, das von einem Spender abgegeben wird. Anschließend wird der Träger von dem Halter, der zur Realisierung einer Zusatzfunktion zusätzlich auch als Kühleinheit ausgebildet ist, gekühlt.

Anstelle eines schneidbaren Trägers kann auch eine spezielle Gewebekassette verwendet werden, wie sie aus DE 10 2013 204 651 A1 bekannt ist. In dieser Druckschrift ist ein Einbettprozess beschrieben, bei dem kein spezieller, schneidbarer Träger erforderlich ist. Bei diesem Einbettprozess wird Paraffin in die Gewebekassette eingefüllt und die Gewebekassette anschließend gegen eine Abkühloberfläche gehalten, so dass das Paraffin am Boden der Gewebekassette abzukühlen beginnt. Durch das in diesem Bereich abkühlende Paraffin haftet eine erste, dünne Schicht von verfestigtem Paraffin die Gewebeprobe an der Basis an. Während das übrige Paraffin immer noch geschmolzen ist, zieht ein Rückziehbauteil eine erste Gewebeeingriffsfläche weg von der Gewebeprobe.

Konkret ist aus DE 10 2013 204 651 A1 eine Gewebekassette zum Halten einer Gewebeprobe bekannt, die ein Aufbewahrungsbauteil, das eine erste Gewebeeingriffsfläche hat, und wenigstens ein Vorspannelement aufweist. Die erste Gewebeeingriffsfläche ist beweglich durch das Vorspannelement an dem Aufbewahrungsbauteil befestigt. Eine Basis weist eine zweite Gewebeeingriffsfläche auf und ist so ausgebildet, dass sie in das Aufbewahrungsbauteil eingreift, um einen Innenraumbereich auszubilden, wobei die erste und die zweite Gewebeeingriffsfläche einander zugewandt sind. Das Vorspannelement ist so konfiguriert, dass es die erste Gewebeeingriffsfläche zu der zweiten Gewebeeingriffsfläche drängt, um die Gewebeprobe dazwischen in dem Innenraumbereich aufzubewahren. Ein Rückziehbauteil ist mit dem Aufbewahrungsbauteil verbunden und so ausgebildet, dass es die erste Gewebeeingriffsfläche zurückzieht und das Vorspannelement komprimiert, um eine Lücke zwischen der Gewebeprobe und entweder der ersten Gewebeeingriffsfläche oder der zweiten Gewebeeingriffsfläche zu bilden.

Allerdings ist die Verwendung einer solchen Gewebekassette in der Praxis nicht unproblematisch, weil eine ganze Reihe von störenden Phänomenen auftreten können, die sogar dazu führen können, dass die Gewebeprobe unbrauchbar wird. Beispielsweise kann es dazu kommen, dass sich die Gewebeprobe ungewollt beim Rückziehvorgang bewegt oder beschädigt wird oder gar dazu, dass sich die Gewebeeingriffsfläche gar nicht oder nicht ausreichend weit zurückziehen lässt.

Es ist daher die Aufgabe der vorliegenden Erfindung, ein Verfahren anzugeben, das automatisiert ausführbar ist und ein zuverlässiges Erzeugen eines Einbettblocks ermöglicht, in dem eine Gewebeprobe eine vordefinierte Ausrichtung aufweist.

Die Aufgabe wird durch ein Verfahren gelöst, das durch folgende Schritte gekennzeichnet ist:
a. Haltern der Gewebeprobe in einer Sollausrichtung in einem Behälter mittels eines Haltelements, das die Gewebeprobe gegen eine Basis des Behälters drückt,
b. Einfüllen eines flüssigen Einbettmediums, nämlich Paraffin, das einen Tropfpunkt im Bereich von 50 Grad Celsius bis 60 Grad Celsius hat und das eine Temperatur aufweist, die 4 Grad Celsius bis 7 Grad Celsius über dem Tropfpunkt des Einbettmediums liegt, in den Behälter,
c. Abkühlen der Basis des Behälters) dadurch, dass der Behälter (2) mit einem Kühlelement in wärmeleitenden Kontakt gebracht wird,
d. Ausführen einer Trennbewegung, durch die sich die Gewebeprobe und das Haltelement voneinander entfernen, wobei
   i. die Trennbewegung entweder unmittelbar nach Ablauf einer Zeitspanne (t₁) im Bereich von 1 Sekunde bis 4 Sekunden nach dem Beginn des Abkühlens automatisch gestartet wird, oder stattdessen die Temperatur des Einbettmediums oder des Behälters oder des Halteelements mit einem Temperatursensor gemessen wird und die Trennbewegung automatisch ausgelöst wird, sobald die gemessene Temperatur eine vorgegebene oder vorgebbare Auslösetemperatur erreicht, und wobei
   ii. die Schichten des Einbettmediums, durch die sich das Halteelement während der Trennbewegung bewegt, während der Trennbewegung noch flüssig sind und Temperaturen im Bereich von 54 Grad Celsius bis 64 Grad Celsius, insbesondere von 60 Grad Celsius, aufweisen, und/oder wobei die jeweils unmittelbar an das Halteelement angrenzenden Anteile des Einbettmediums während der Trennbewegung noch flüssig sind und eine Temperatur im Bereich von 54 Grad Celsius bis 64 Grad Celsius, insbesondere von 60 Grad Celsius, aufweisen.

Die Aufgabe wird auch durch einen Automaten gemäß Anspruch 10 gelöst.

Die Erfindung hat den ganz besonderen Vorteil, dass einerseits stets zuverlässig ein Halten der Gewebeprobe in ihrer Ausrichtung relativ zu dem Behälter sichergestellt ist und gleichzeitig andererseits gewährleistet ist, dass das Halteelement entfernt werden kann, ohne im Einbettmedium stecken zu bleiben und ohne die Gewebeprobe in ihrer Lage zu verändern oder gar zu beschädigen.

In erfindungsgemäßer Weise wurde erkannt, dass die an die gekühlte Basis angrenzenden Anteile des Einbettmediums bereits ausreichend ausgehärtet sind, um die Gewebeprobe in ihrer Position und Ausrichtung zu halten, wenn die Temperatur des Einbettmediums am Ort des Halteelements noch im Bereich von 54 Grad Celsius bis 64 Grad Celsius, insbesondere bei 60 Grad Celsius liegen, so dass das Halteelement von der Gewebeprobe entfernt werden kann. In diesem Temperaturbereich ist das Einbettmedium noch ausreichend flüssig, um das Halteelement störungsfrei und insbesondere ohne die Gewebeprobe in ihrer Position oder Ausrichtung zu beeinflussen oder zu beschädigen oder die Qualität des Aushärtungsprozesses negativ zu beeinflussen, entfernen zu können. Insbesondere kann vorteilhaft vorgesehen sein, dass das Einbettmedium während des Ausführens der Trennbewegung eine mittlere Temperatur im Bereich von 54 Grad Celsius bis 64 Grad Celsius, insbesondere von 60 Grad Celsius, aufweist.

Für die Ausführung der einzelnen Verfahrensschritte bei oben genannten Temperaturen ist insbesondere bei der Verwendung von Paraffin als Einbettmedium vorgesehen, wobei das Paraffin einen Tropfpunkt im Bereich von 50 Grad Celsius bis 60 Grad Celsius hat. Bei Verwendung von Einbettmedien mit anderen Tropfpunkten können die Temperaturen, bei denen die einzelnen Verfahrensschritte ausgeführt werden, entsprechend angepasst werden.

Insbesondere kann vorteilhaft vorgesehen sein, dass die Trennbewegung, insbesondere automatisch, ausgelöst wird, sobald die unmittelbar an die Basis angrenzende Schicht des Einbettmediums eine Temperatur von 52 Grad Celsius erreicht hat. In erfindungsgemäßer Weise wurde erkannt, dass dies dann der Fall ist, wenn die Temperatur des Einbettmediums am Ort des Halteelements im Bereich von 54 Grad Celsius bis 64 Grad Celsius, insbesondere bei 60 Grad Celsius liegt.

Nach dem vollständigen Ausführen der Trennbewegung lässt man das Einbettmedium weiter erkalten, bis es vollständig ausgehärtet ist und der entstandene Einbettblock aus dem Behälter entnommen werden kann.

Bei einer besonders vorteilhaften Ausführung wird das Halteelement nicht vollständig aus dem Einbettmedium entfernt. Vielmehr kann die Trennbewegung vorteilhaft enden, solange sich das Haltelement noch innerhalb des Einbettmediums befindet. Auf diese Weise wird das Halteelement mit eingebettet. Eine solche Ausführung hat den ganz besonderen Vorteil, dass das Halteelement dem durch Erkalten des Einbettmediums entstehenden Einbettblock eine zusätzliche mechanische Stabilität verleiht. Auf diese Weise wird vorteilhaft verhindert, dass sich der Einbettblock beim späteren Einspannen und/oder beim Schneiden mit einem Mikrotom ungewollt verformt. Auch ist es möglich, mit dem Haltelement verbundene Vorsprünge, die aus dem Einbettblock ragen, zum Einspannen zu verwenden. Dadurch, dass das Halteelement mittels der Trennbewegung von der Gewebeprobe entfernt wurde, ist jedoch gleichzeitig vorteilhaft sichergestellt, dass bei der Herstellung von Gewebeschnitten nicht in das stabilisierende Haltelement hinein geschnitten werden muss.

Die Erfindung ist nicht darauf beschränkt, jeweils eine einzige Gewebeprobe einzubetten. Vielmehr ist es auch möglich, gleichzeitig mehrere Gewebeproben in demselben Behälter auf die beschriebene Weise einzubetten. Soweit im Rahmen dieser Anmeldung davon die Rede ist, dass eine Gewebeprobe eingebettet wird, dient dies lediglich der einfacheren Erläuterung der Erfindung, ohne dass damit eine Einschränkung einher gehen soll.

Das Einbettmedium kann beispielsweise Paraffin sein oder, insbesondere überwiegend, Paraffin beinhalten.

Bei einer ganz besonders vorteilhaften Ausführung des Verfahrens hat das Einbettmedium, bei dem es sich um Paraffin mit einem Tropfpunkt im Bereich von 50 Grad Celsius bis 60 Grad Celsius, handelt, beim Einfüllen eine Temperatur über 64 Grad Celsius. Auf diese Weise ist sichergestellt, dass das Einbettmedium den gesamten zur Verfügung stehenden Raum innerhalb des Behälters ausfüllt, bevor es erkaltet. Besonders vorteilhaft ist eine Einfülltemperatur im Bereich von 65 bis 67 Grad Celsius, insbesondere eine Temperatur von 66 Grad Celsius. Bei einer solchen Temperatur ist sichergestellt, dass die Gewebeprobe zuverlässig und allseitig mit dem Einbettmedium umschlossen wird. Darüber hinaus ist die Zeitdauer, die zum Aushärten des Einbettmediums im Bereich der Basis und anschließend zum vollständigen Aushärten in den übrigen Bereichen erforderlich ist, besonders kurz. Auf diese Weise werden hohe Durchsatzraten erreicht, so dass pro Zeiteinheit, beispielsweise von einem Automaten, besonders viele Gewebeproben eingebettet werden können.

Der Tropfpunkt kann sich bei unterschiedlichartigen Einbettmedien unterscheiden. Es gibt beispielsweise Einbettmedien, die einen Tropfpunkt im Bereich von 52 Grad Celsius bis 58 Grad Celsius aufweisen, was beispielsweise in DE 10 2009 035 019 A1 beschrieben ist.

Erfindungsgemäß ist vorgesehen, dass das Einbettmedium beim Einfüllen eine Temperatur aufweist, die 4 Grad Celsius bis 7 Grad Celsius über dem Tropfpunkt des Einbettmediums liegt. Insbesondere kann vorteilhaft vorgesehen sein, dass das Einbettmedium beim Einfüllen eine Temperatur aufweist, die 5 bis 7 Grad Celsius über dem Tropfpunkt des Einbettmediums liegt und/oder die 6 Grad Celsius über dem Tropfpunkt des Einbettmediums liegt. Beispielsweise ein Einbettmedium, das einen Tropfpunkt von beispielsweise 55 Grad Celsius aufweist, kann vorteilhaft insbesondere bei einer Temperatur 61 Grad Celsius eingefüllt werden.

Nachfolgend wird erläutert, wie und insbesondere wann die Trennbewegung eingeleitet wird.

Beispielsweise kann, wie oben erwähnt, vorgesehen sein, dass die Trennbewegung bei Erreichen einer vorgegebenen oder vorgebbaren Auslösetemperatur des Einbettmediums oder des Behälters oder des Haltelements, insbesondere automatisch, ausgelöst wird. Hierzu wird die Temperatur mit einem Temperatursensor direkt gemessen. Alternativ ist es auch möglich, über einen anderen Parameter auf die Temperatur rückzuschließen, um so festzustellen, ob die Auslösetemperatur erreicht ist. Insbesondere ist es möglich, über die Zeitdauer seit dem Beginn des Kühlvorganges an der Basis auf die Temperatur des Einbettmediums oder des Behälters oder des Haltelements zu schließen. Insbesondere kann hier zuvor der Durchführung des Verfahrens eine kann Kalibrationsmessung durchgeführt worden sein, um festzustellen, nach welcher Zeitspanne die Auslösetemperatur vorliegt. Die Dauer der Zeitspanne kann insbesondere von der Art und Größe des Behälters und von der Art des Einbettmediums abhängen.

Das Halteelement kann vorteilhaft beispielsweise als Sieb ausgebildet sein. Ein derart ausgebildetes Halteelement hat den Vorteil, dass das Einbettmedium während der Trennbewegung durch die Sieböffnungen strömen kann. Auf diese Weise wird vorteilhaft erreicht, dass Turbulenzen im Einbettmedium, die die Ausrichtung der Gewebeprobe negativ beeinflussen könnten, während der Trennbewegung weitgehend vermieden sind. Außerdem hat eine derartige Ausbildung den weiteren Vorteil, dass der Trennbewegung weniger Widerstand entgegengesetzt wird und die Gefahr des Steckenbleibens des Halteelements verringert ist.

Das Halteelement kann zum Ausführen der Trennbewegung auf unterschiedlichste Art bewegt werden. Beispielsweise ist es möglich, mittels eines Magneten eine Kraft auf das Halteelemente auszuüben. Hierzu kann das Halteelement wenigstens teilweise aus einem magnetischen Material bestehen. Es ist auch möglich, das Halteelement mittels eines Greifers horizontal und/oder vertikal zu bewegen. Der Greifer kann beispielsweise als Haken ausgebildet sein, der sich zum Ausführen der Trennbewegung an dem Halteelement einhakt. Wie bereits erwähnt, kann auch vorgesehen sein, dass das Halteelement zum Ausführen der Trennbewegung mittels eines Haltemechanismus bewegt wird, der ein Formgedächtnisbauteil, beispielsweise auf der Basis von Memory-Polymeren, aufweist.

Es ist erfindungsgemäß vorgesehen, dass der Zeitpunkt des Beginns des Abkühlens als Zeitbasis herangezogen wird und die Trennbewegung unmittelbar nach Ablauf einer vorgegebenen oder vorgebbaren Zeitspanne nach dem Beginn des Abkühlens beginnt, und/oder dass die Trennbewegung unmittelbar nach Ablauf einer vorgegebenen oder vorgebbaren Zeitspanne nach dem Beginn des Abkühlens automatisch gestartet wird. Erfindungsgemäß ist vorgesehen, dass die Zeitspanne zwischen dem Beginn des Abkühlens und dem Beginn der Trennbewegung im Bereich von 1 Sekunde bis 4 Sekunden, insbesondere im Bereich von 2 Sekunden bis 3 Sekunden liegt.

Insbesondere um zu gewährleisten, dass das Halteelement nicht vor Abschluss der Trennbewegung im erkaltenden und zunehmend erstarrenden Einbettmedium ungewollt gestoppt wird, sollte die Trennbewegung innerhalb eines vorgegebenen oder vorgebbaren Zeitfensters ablaufen und/oder eine vorgegebene oder vorgebbare Zeitspanne andauern. Besonders gute Ergebnisse werden erzielt, wenn das Zeitfenster 17 bis 20 Sekunden lang ist und/oder dass die Zeitspanne andauert 17 bis 20 Sekunden andauert.

Das Abkühlen der Basis des Behälters wird dadurch bewirkt, dass der Behälter mit einem Kühlelement in wärmeleitenden Kontakt gebracht wird. Bei dem Kühlelement kann es sich beispielsweise um eine Kühlplatte handeln, auf die der Behälter gestellt wird.

Es ist zur Durchführung des Verfahrens beispielsweise möglich, zunächst das Einbettmedium in den Behälter einzufüllen und anschließend die Basis des Behälters, beispielsweise durch In-Kontakt-Bringen mit einer Kühlplatte, zu kühlen. Bei einer solchen Ausführung kann der Moment des In-Kontakt-Bringens als Startzeitpunkt für die Zeitspanne, nach deren Ablauf die Trennbewegung gestartet wird, herangezogen werden. Alternativ ist es auch möglich, zunächst den Behälter an der Basis, beispielsweise durch In-Kontakt-Bringen mit einer Kühlplatte, zu kühlen und anschließend das Einbettmedium einzufüllen. In diesem Fall kann der Zeitpunkt des Einfüllens, insbesondere der Zeitpunkt der Beendigung des Einfüllvorganges, als Startzeitpunkt für Zeitspanne, nach deren Ablauf die Trennbewegung gestartet wird, herangezogen werden.

Bei einer ganz besonders vorteilhaften Ausführung wird der Behälter ausschließlich an der Basis gekühlt. Eine solche Ausführung hat den ganz besonderen Vorteil, dass Spannungsrisse innerhalb des erkalteten Einbettmediums wirksam vermieden werden.

Wie bereits erwähnt, kann das erfindungsgemäße Verfahren insbesondere bei einer automatisierten Verarbeitung von Gewebeproben zum Einsatz kommen. Hierbei ist es insbesondere möglich, eine Vielzahl von Gewebeproben, die in einer Vielzahl von Behältern, in denen die Gewebeproben in ihrer jeweiligen Zielausrichtung gehaltert sind, gleichzeitig einzubetten. Hierbei können beispielsweise jeweils mehrere Behälter in jeweils einer gemeinsamen Halterung, beispielsweise matrixartig und koplanar in einer Ebene, gehaltert sein. Ein solcher Halter, kann beispielsweise leicht auf einer Kühlplatte abgelegt werden, um gleichzeitig die mehreren Behälter jeweils an ihrer Basis zu kühlen. Es ist jedoch beispielsweise auch möglich, einen Halter zu verwenden, bei dem die Behälter in Stapelanordnung angeordnet sind. Bei einer solchen Ausführung könnten beispielsweise mehrere Kühlfinger vorgesehen sein, die in die Zwischenräume zwischen den Behältern greifen, um die einzelnen Behälter jeweils von unten an ihrer Basis zu kühlen. Die Verwendung einer Halterung für mehrere Behälter hat den Vorteil, dass ein Automat durch Handhaben der gemeinsamen Halterung gleichzeitig mehrere Behälter transportieren, mit einem Einbettmedium befüllen und abkühlen kann, was die Durchsatzrate erhöht.

Das erfindungsgemäße Verfahren kann insbesondere auch Bestandteil eines übergeordneten Verfahrens zum Verarbeiten einer Gewebeprobe oder mehrerer Gewebeproben sein, bei dem außer einem Einbetten, vorausgehend oder nachfolgend, noch weitere Prozessschritte ausgeführt werden. Bei den weiteren Prozessschritten kann es sich insbesondere darum handeln, die Gewebeprobe vor einem Einbetten mit wenigstens einem Fixiermittel zu fixieren und/oder ein Infiltrationsmedium, insbesondere Paraffin, in die Gewebeprobe zu infiltrieren. Hierbei kann insbesondere vorgesehen sein, dass auch die weiteren Prozessschritte durchgeführt werden, nachdem die Gewebeprobe in ihrer Zielausrichtung in dem Behälter angeordnet wurde. Die Gewebeprobe verbleibt insoweit während des Einbettens und während wenigstens eines vorausgehenden weiteren Prozessschritts in demselben Behälter, bis sie vollständig eingebettet ist.

Von besonderem Vorteil ist die Verwendung einer Gewebekassette, die einen Behälter mit einer Basis und ein Halteelement zum Halten wenigstens einer Gewebeprobe an der Basis aufweist, für die Ausführung des erfindungsgemäßen Verfahrens.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1 bis 5: eine Illustration der Schritte gemäß einem Ausführungsbeispiel des erfindungsgemäßen Verfahrens, und
- Fig. 6: eine Illustration des zeitlichen Temperaturverlaufs der Temperatur eines in einen Behälter eingefüllten Einbettmediums und eine Illustration der relevanten Zeitspannen bei der Durchführung eines Ausführungsbeispiels des erfindungsgemäßen Verfahrens.

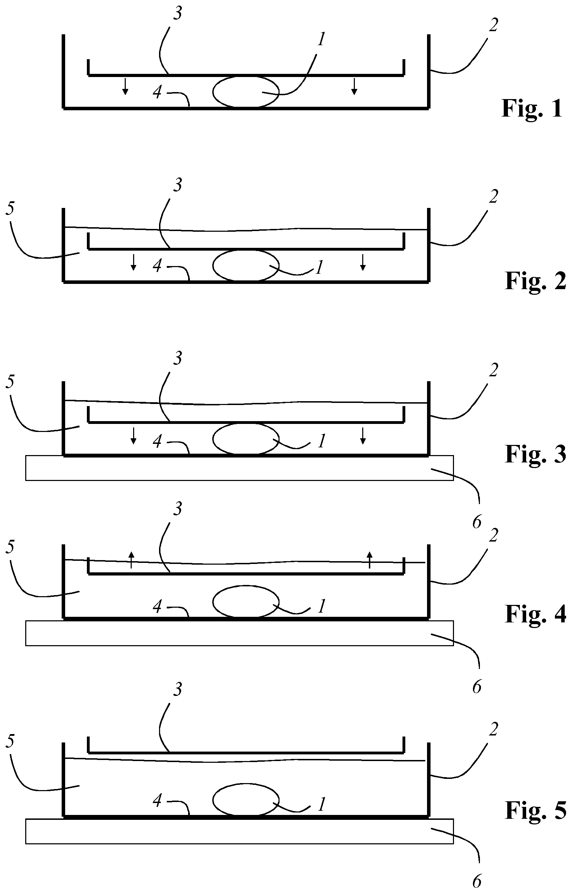

Figur 1 illustriert die Situation bei einem ersten Schritt zur Ausführung eines Ausführungsbeispiels des erfindungsgemäßen Verfahrens. Eine Gewebeprobe 1 wird in einer Sollausrichtung in einem Behälter 2 mittels eines Halteelement 3, das die Gewebeprobe 1 gegen eine Basis 4 des Behälters 2 drückt, gehaltert. Das Halteelement 3 kann beispielsweise als federbelastetes Sieb ausgebildet sein. Dadurch, dass die Gewebeprobe 1 zwischen dem Halteelement 3 und der Basis 4 eingeklemmt ist wird sichergestellt, dass die Gewebeprobe 1 ihre Sollausrichtung beibehält.

In einem nächsten Schritt wird ein flüssiges Einbettmedium 5, das insbesondere Paraffin sein kann und das eine Temperatur über 64 Grad Celsius, insbesondere im Bereich von 65 Grad Celsius bis 67 Grad Celsius oder eine Temperatur von 66 Grad Celsius, aufweist, in den Behälter eingefüllt, was in Figur 2 illustriert ist. Während dieses Schrittes hält das Halteelement 3 die Gewebeprobe 1 stets in ihrer Position und Sollausrichtung.

In einem nächsten Schritt erfolgt ein Abkühlen der Basis 4 des Behälters 2, durch ein In-Kontakt-Bringen der Basis 4 mit einem Kühlelement 6, was in Figur 3 illustriert ist. In diesem Beispiel ist das Kühlelement 6 als Kühlplatte ausgebildet, auf der der Behälter 2 abgestellt wird. Auch während dieses Schrittes hält das Halteelement 3 die Gewebeprobe 1 stets in ihrer Position und Sollausrichtung.

Sobald die Schicht des Einbettmediums 5, in der sich das Halteelement 3 befindet eine Temperatur im Bereich von 54 Grad Celsius bis 64 Grad Celsius, insbesondere von 60 Grad Celsius, aufweist, wird eine Trennbewegung gestartet, durch die sich die Gewebeprobe 1 und das Haltelement 3 voneinander entfernen, was in Figur 4 dargestellt ist. In dieser Situation ist das Einbettmedium 5 im Bereich der Basis bereits ausreichend abgekühlt und dadurch ausgehärtet, um die Gewebeprobe 1 in ihrer Position und Ausrichtung zu halten, so das Halten mittels des Halteelements 3 unnötig geworden ist. Um zu gewährleisten, dass das Halteelement 3 nicht vor Abschluss der Trennbewegung im erkaltenden und zunehmend erstarrenden Einbettmedium 5 stecken bleibt, wird die Trennbewegung innerhalb eines vorgegebenen Zeitfensters von 17 bis 20 Sekunden abgeschlossen.

Anschließend kann das Einbettmedium 5 weiter erkalten bis es vollständig ausgehärtet ist und der entstandene Einbettblock samt der eingebetteten Gewebeprobe 1 aus dem Behälter 2 entnommen werden kann.

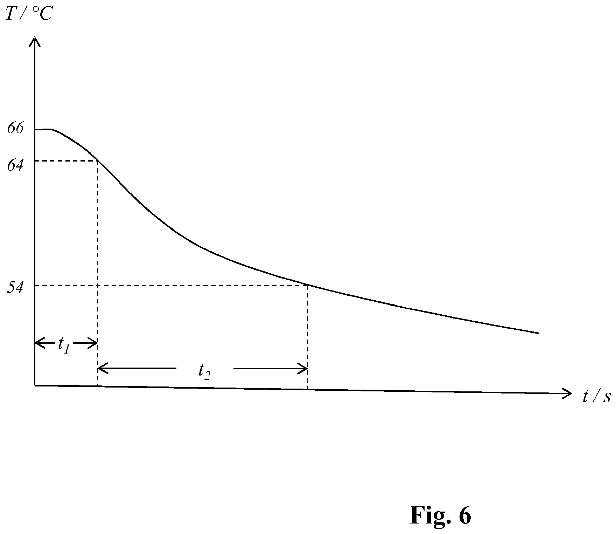

Fig. 6 zeigt den zeitlichen Temperaturverlauf der Temperatur des anfänglich eine Temperatur von 66 Grad Celsius aufweisenden Einbettmediums 5 im Bereich des Halteelements 3 nach dem Beginn des Abkühlens (t = 0) der Basis 4 und illustriert die relevanten Zeitspannen bei der Durchführung eines Ausführungsbeispiels des erfindungsgemäßen Verfahrens.

Die Trennbewegung beginnt bei diesem Ausführungsbeispiel unmittelbar nach Ablauf einer ersten Zeitspanne t₁ nach dem Beginn des Abkühlens (t = 0). Besonders gute Ergebnisse werden erzielt, wenn die erste Zeitspanne t₁ im Bereich von 1 Sekunde bis 4 Sekunden oder im Bereich von 2 Sekunden bis 3 Sekunden liegt.

Insbesondere um zu gewährleisten, dass das Halteelement 3 nicht vor Abschluss der Trennbewegung im erkaltenden und zunehmend erstarrenden Einbettmedium 5 ungewollt festgehalten wird, sollte die Trennbewegung innerhalb einer sich unmittelbar an die erste Zeitspanne t₁ anschließenden zweiten Zeitspanne t2 stattfinden und abgeschlossen sein. Besonders gute Ergebnisse werden erzielt, wenn die zweite Zeitspanne t2 17 bis 20 Sekunden lang ist.

### Bezugszeichenliste:

- 1: Gewebeprobe
- 2: Behälter
- 3: Halteelement
- 4: Basis
- 5: Einbettmedium
- 6: Kühlelement
- t₁: erste Zeitspanne
- t₂: zweite Zeitspanne

## Patentansprüche

1. Verfahren zum Einbetten einer Gewebeprobe (1) in ein Einbettmedium (5), **gekennzeichnet durch** folgende Schritte:
a. Haltern der Gewebeprobe (1) in einer Sollausrichtung in einem Behälter (2) mittels eines Haltelements (3), das die Gewebeprobe (1) gegen eine Basis (4) des Behälters (2) drückt,
b. Einfüllen eines flüssigen Einbettmediums (5), nämlich Paraffin, das einen Tropfpunkt im Bereich von 50 Grad Celsius bis 60 Grad Celsius hat und das eine Temperatur aufweist, die 4 Grad Celsius bis 7 Grad Celsius über dem Tropfpunkt des Einbettmediums (5) liegt, in den Behälter (2),
c. Abkühlen der Basis (4) des Behälters (2) **dadurch, dass** der Behälter (2) mit einem Kühlelement in wärmeleitenden Kontakt gebracht wird.
d. Ausführen einer Trennbewegung, durch die sich die Gewebeprobe (1) und das Halteelement (3) voneinander entfernen, wobei
i. die Trennbewegung entweder unmittelbar nach Ablauf einer Zeitspanne (t₁) im Bereich von 1 Sekunde bis 4 Sekunden nach dem Beginn des Abkühlens automatisch gestartet wird, oder stattdessen die Temperatur des Einbettmediums (5) oder des Behälters (2) oder des Halteelements (3) mit einem Temperatursensor gemessen wird und die Trennbewegung automatisch ausgelöst wird, sobald die gemessene Temperatur eine vorgegebene oder vorgebbare Auslösetemperatur erreicht, und wobei
ii. die Schichten des Einbettmediums (5), durch die sich das Halteelement (3) während der Trennbewegung bewegt, während der Trennbewegung noch flüssig sind und Temperaturen im Bereich von 54 Grad Celsius bis 64 Grad Celsius, insbesondere von 60 Grad Celsius, aufweisen, und/oder wobei die jeweils unmittelbar an das Halteelement (3) angrenzenden Anteile des Einbettmediums (5) während der Trennbewegung noch flüssig sind und eine Temperatur im Bereich von 54 Grad Celsius bis 64 Grad Celsius, insbesondere von 60 Grad Celsius, aufweisen.

2. Verfahren nach Anspruch 1, **dadurch gekennzeichnet, dass** das Einbettmedium (5) während des Ausführens der Trennbewegung eine mittlere Temperatur im Bereich von 54 Grad Celsius bis 64 Grad Celsius, insbesondere von 60 Grad Celsius, aufweist.

3. Verfahren nach einem der Ansprüche 1 bis 2, **dadurch gekennzeichnet, dass**
das Einbettmedium (5) beim Einfüllen eine Temperatur über 64 Grad Celsius und/oder eine Temperatur im Bereich von 65 bis 67 Grad Celsius und/oder eine Temperatur von 66 Grad Celsius aufweist.

4. Verfahren nach einem der Ansprüche 1 bis 3, **dadurch gekennzeichnet, dass**
a. die Trennbewegung innerhalb eines vorgegebenen oder vorgebbaren Zeitfensters abläuft und/oder eine vorgegebene oder vorgebbare Zeitspanne (t₂) andauert, und/oder dass
b. die Trennbewegung innerhalb eines vorgegebenen oder vorgebbaren Zeitfensters abläuft und/oder eine vorgegebene oder vorgebbare Zeitspanne (t₂) andauert, wobei das Zeitfenster 17 bis 20 Sekunden lang ist und/oder dass die Zeitspanne (t₂) 17 bis 20 Sekunden andauert.

5. Verfahren nach einem der Ansprüche 1 bis 4, **dadurch gekennzeichnet, dass** der Behälter (2) ausschließlich an der Basis (4) gekühlt wird.

6. Verfahren nach einem der Ansprüche 1 bis 5, **dadurch gekennzeichnet, dass** die Trennbewegung endet, solange sich das Haltelement noch innerhalb des Einbettmediums befindet und/oder dass das Haltelement zusammen mit der Gewebeprobe mit eingebettet wird.

7. Verfahren zum Verarbeiten einer Gewebeprobe (1), bei dem die Gewebeprobe (1) in einen Behälter (2) eingebracht und ,während sie sich in dem Behälter (2) befindet, mit wenigstens einem Fixiermittel fixiert und/oder ein Infiltrationsmedium, insbesondere Paraffin, infiltriert wird, **dadurch gekennzeichnet, dass** die Gewebeprobe (1) nach dem Fixieren und/oder Infiltrieren in dem Behälter (2) verbleibt und mittels eines Verfahrens nach einem der Ansprüche 1 bis 6 eingeblockt wird.

8. Verwendung einer Gewebekassette, die einen Behälter (2) mit einer Basis (4) und ein Halteelement zum Halten wenigstens einer Gewebeprobe (1) an der Basis (4) aufweist, bei der Ausführung eines Verfahrens nach einem der Ansprüche 1 bis 7.

9. Automat zum Ausführen eines Verfahrens nach einem der Ansprüche 1 bis umfassend
a. ein Kühlelement (6) zum Abkühlen der Basis (4) des Behälters und
b. Mittel zum automatisierten Ausführen der Trennbewegung gemäß Schritt d des Anspruchs 1.

## Claims

1. Method of embedding a tissue sample (1) into an embedding medium (5), **characterized by** the following steps:
a. holding the tissue sample (1) in a target direction in a vessel (2) by means of a holding element (3) that presses the tissue sample (1) against a base (4) of the vessel (2),
b. introducing a liquid embedding medium (5), namely paraffin having a dropping point in the range from 50 degrees Celsius to 60 degrees Celsius and having a temperature 4 degrees Celsius to 7 degrees Celsius above the dropping point of the embedding medium (5), into the vessel (2),
c. cooling the base (4) of the vessel (2) in such a way that the vessel (2) is brought into heat-conducting contact with a cooling element,
d. executing a separating movement resulting in separation of the tissue sample (1) and the holding element (3) from one another, wherein
i. the separating movement is automatically started immediately after a timespan (t₁) in the range from 1 second to 4 seconds after the commencement of the cooling has elapsed, or instead the temperature of the embedding medium (5) or of the vessel (2) or of the holding element (3) is measured with a temperature sensor and the separating movement is automatically triggered as soon as the measured temperature reaches a defined or definable trigger temperature, and wherein
ii. the layers of the embedding medium (5) through which the holding element (3) moves during the separating movement are still liquid during the separating movement and have temperatures in the range from 54 degrees Celsius to 64 degrees Celsius, especially of 60 degrees Celsius, and/or wherein the portions of the embedding medium (5) directly adjoining the holding element (3) in each case are still liquid during the separating movement and have a temperature in the range from 54 degrees Celsius to 64 degrees Celsius, especially of 60 degrees Celsius.

2. Method according to Claim 1, **characterized in that** the embedding medium (5) during the execution of the separating movement has an average temperature in the range from 54 degrees Celsius to 64 degrees Celsius, especially of 60 degrees Celsius.

3. Method according to either of Claims 1 and 2, **characterized in that** the embedding medium (5) on introduction has a temperature above 64 degrees Celsius and/or a temperature in the range from 65 to 67 degrees Celsius and/or a temperature of 66 degrees Celsius.

4. Method according to any of Claims 1 to 3, **characterized in that**
a. the separating movement proceeds within a defined or definable time window and/or lasts for a defined or definable timespan (t₂), and/or **in that**
b. the separating movement proceeds within a defined or definable time window and/or lasts for a defined or definable timespan (t₂), wherein the time window is 17 to 20 seconds long and/or **in that** the timespan (t₂) lasts for 17 to 20 seconds.

5. Method according to any of Claims 1 to 4, **characterized in that** the vessel (2) is cooled exclusively at the base (4).

6. Method according to any of Claims 1 to 5, **characterized in that** the separating movement ends while the holding element is still within the embedding medium and/or **in that** the holding element is embedded together with the tissue sample.

7. Method of processing a tissue sample (1), in which the tissue sample (1) is introduced into a vessel (2) and, while it is within the vessel (2), is fixed with at least one fixative and/or infiltrated with an infiltration medium, especially paraffin, **characterized in that** the tissue sample (1) remains in the vessel (2) after the fixing and/or infiltrating and is blocked by means of a method according to any of Claims 1 to 6.

8. Use of a tissue cassette having a vessel (2) with a base (4) and a holding element for holding at least one tissue sample (1) on the base (4), in the execution of a method according to any of Claims 1 to 7.

9. Machine for executing a method as claimed in any of Claims 1 to 7, comprising
a. a cooling element (6) for cooling the base (4) of the vessel and
b. means of automated execution of the separating movement of step d of Claim 1.

## Revendications

1. Procédé d'enrobage d'un échantillon de tissu (1) dans un milieu d'enrobage (5), **caractérisé par** les étapes suivantes :
a. maintenir l'échantillon de tissu (1) dans une orientation cible dans un récipient (2) au moyen d'un élément de retenue [3) qui presse l'échantillon de tissu (1) contre une base (4) du récipient (2},
b. introduire dans le récipient (2) un milieu d'enrobage liquide (5), à savoir de la paraffine, qui a un point de goutte compris entre 50 degrés Celsius et 60 degrés Celsius et qui a une température qui est de 4 degrés Celsius à 7 degrés Celsius au-dessus du point de goutte du milieu d'enrobage [5),
c. refroidir la base (4) du récipient (2) par mise en contact, avec conduction de chaleur, du récipient (2) avec un élément de refroidissement,
d. effectuer un mouvement de séparation permettant d'éloigner l'échantillon de tissu (1) et l'élément de retenue (3) l'un de l'autre,
i. le mouvement de séparation démarrant soit automatiquement immédiatement au bout d'une durée (t₁) comprise entre 1 seconde et 4 secondes après le début du refroidissement, soit à la place la température du milieu d'enrobage (5) ou du récipient (2) ou de l'élément de maintien (3) étant mesurée avec un capteur de température et le mouvement de séparation étant déclenché automatiquement dès que la température mesurée atteint une température de déclenchement spécifiée ou spécifiable, et
ii.les couches du milieu d'enrobage (5) à travers lesquelles l'élément de retenue (3) se déplace pendant le mouvement de séparation, étant encore liquides pendant le mouvement de séparation et ayant des températures comprises entre 54 degrés Celsius et 64 degrés Celsius, en particulier de 60 degrés Celsius, et/ou les parties du milieu d'enrobage (5) immédiatement adjacentes à l'élément de retenue (3) étant encore liquides pendant le mouvement de séparation et ayant une température dans la gamme de 54 degrés Celsius à 64 degrés Celsius, en particulier de 60 degrés Celsius.

2. Procédé selon la revendication 1, **caractérisé en ce que** le milieu d'enrobage (5) a une température moyenne dans la gamme de 54 degrés Celsius à 64 degrés Celsius, en particulier de 60 degrés Celsius, pendant que le mouvement de séparation est effectué.

3. Procédé selon l'une des revendications 1 et 2, **caractérisé en ce que** le milieu d'enrobage (5) a une température supérieure à 64 degrés Celsius et/ou une température dans la gamme allant de 65 à 67 degrés Celsius et/ou une température de 66 degrés Celsius pendant le remplissage.

4. Procédé selon l'une des revendications 1 à 3, **caractérisé en ce que**
a. le mouvement de séparation est effectué dans une fenêtre temporelle spécifiée ou spécifiable et/ou a une durée spécifiée ou spécifiable (t₂), et/ou **en ce que**
b. le mouvement de séparation est effectué dans une fenêtre temporelle spécifiée ou spécifiable et/ou a une durée spécifiée ou spécifiable (t₂) , la fenêtre temporelle étant de 17 à 20 secondes et/ou la durée (t₂) étant de 17 à 20 secondes.

5. Procédé selon l'une des revendications 1 à 4, **caractérisé en ce que** le récipient (2) est refroidi uniquement au niveau de la base (4).

6. Procédé selon l'une des revendications 1 à 5, **caractérisé en ce que** le mouvement de séparation cesse tant que l'élément de retenue se trouve encore à l'intérieur du milieu d'enrobage et/ou **en ce que** l'élément de retenue est également enrobé conjointement avec l'échantillon de tissu.

7. Procédé de traitement d'un échantillon de tissu (1), procédé dans lequel l'échantillon de tissu (1) est introduit dans un récipient (2) et, pendant qu'il se trouve dans le récipient (2), est fixé avec au moins un agent de fixation et/ou est infiltré avec un milieu d'infiltration, notamment de la paraffine, **caractérisé en ce que** l'échantillon de tissu (1) reste dans le récipient (2) après la fixation et/ou l'infiltration et est immobilisé d'un seul bloc au moyen d'un procédé selon l'une des revendications 1 à 6.

8. Utilisation d'une cassette de tissu qui comporte un récipient (2) pourvu d'une base (4) et un élément de retenue destiné à maintenir au moins un échantillon de tissu (1) sur la base (4), lors de la mise en œuvre d'un procédé selon l'une des revendications 1 à 7.

9. Machine automatique destinée à mettre en œuvre un procédé selon l'une des revendications 1 à 7, ladite machine automatique comprenant
a. un élément de refroidissement (6) destiné à refroidir la base (4) du récipient et
b. des moyens destinés à effectuer automatiquement le mouvement de séparation selon l'étape d de la revendication 1.
